Europäisches Patentamt

European Patent Office

Office européen des brevets

(19)

(11) EP 1 443 078 A1

(12) EUROPEAN PATENT APPLICATION

(43) Date of publication:
04.08.2004 Bulletin 2004/32

(51) Int Cl.⁷: C08L 25/06, C08F 279/02,
C08F 8/48, C08F 136/06

(21) Application number: 04001970.5

(22) Date of filing: 29.01.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 31.01.2003 JP 2003023387
31.01.2003 JP 2003023389
03.03.2003 JP 2003055687
03.03.2003 JP 2003055688
04.03.2003 JP 2003057218
04.03.2003 JP 2003057219

(71) Applicant: Ube Industries, Ltd.
Ube-Shi, Yamaguchi (JP)

(72) Inventors:
• Asakura, Yoshio
Ichihara-shi Chiba (JP)
• Okabe, Yasuyoshi
Ichihara-shi Chiba (JP)

(74) Representative:
Forstmeyer, Dietmar, Dr. rer. nat., Dipl.-Chem. et
al
Boeters & Lieck,
Bereiteranger 15
81541 München (DE)

(54) **High impact polystyrene resin composition comprising a modified polybutadiene**

(57)    A rubber-modified high impact polystyrene resin composition containing a rubbery polymer, wherein the rubbery polymer is modified polybutadiene which is obtained by modifying high-cis/high-vinyl polybutadiene in the presence of a transition metal catalyst and preferably has a cold flow rate of less than 20 mg/min.

EP 1 443 078 A1

**Description**

BACKGROUND OF THE INVENTION

Field of the Invention

This invention relates to a rubber-modified high impact polystyrene resin composition exhibiting high impact resistance in good balance with other performance properties.

Description of the Related Art

A copolymer obtained by radical polymerization of a styrene monomer in the presence of polybutadiene is widely known as high impact polystyrene (HIPS) having improved impact resistance as well as the excellent characteristics of polystyrene. The polybutadiene used as a rubber modifier to produce HIPS includes low-cis polybutadiene having a cis-1,4 structure content of 30 to 35%, a vinyl structure content of 10 to 20%, and a trans-1,4 structure content of 50 to 60%, which is generally obtained by 1,3-butadiene polymerization using an alkyl lithium catalyst, (hereinafter referred to as low-cis BR) and high-cis polybutadiene having a cis-1,4 structure content of 90 to 98%, a vinyl structure content of 1 to 5%, and a trans-1,4 structure content of 1 to 5%, which is generally obtained by 1,3-butadiene polymerization using a cobalt, titanium or nickel catalyst, (hereinafter referred to as high-cis BR).

The present inventors have proposed HIPS containing, as a rubber modifier, high-cis/high-vinyl polybutadiene having a cis-1,4 structure content of 65 to 95% and a 1,2-structure content of 4 to 30% which is obtained by using a metallocene catalyst (see, for example, JP-A-10-139835, JP-A-10-152535, JP-A-10-218949, and JP-A-10-273574).

The high-cis BR exhibits excellent low temperature characteristics because of its low glass transition temperature (usually ranging from -95° to -110°C) but has low reactivity with a styrene monomer, i.e., low graft ratio due to its low vinyl structure content. Therefore, HIPS obtained using the high-cis BR is, while excellent in Izod impact resistance, unsatisfactory in terms of size reduction of rubber particles (gloss) and surface impact resistance (Du Pont impact strength). The low-cis BR, on the other hand, has a high glass transition temperature (usually ranging from -75° to -95°C) and a high vinyl structure content thereby exhibiting high reactivity (graft ratio) to a styrene monomer. Therefore, HIPS obtained using the low-cis BR is excellent in size reduction of rubber particles and surface impact resistance but unsatisfactory in Izod impact resistance and low temperature characteristics.

The high-cis/high-vinyl polybutadiene exhibits both the characteristics of the high-cis BR and the low-cis BR. That is, it is equal to the low-cis BR in reactivity to a styrene monomer ascribed to its high vinyl structure content and therefore provides HIPS excellent in size reduction of rubber particles (gloss) and surface impact resistance. The resulting HIPS is also excellent in Izod impact resistance and low temperature characteristics owing to the low glass transition temperature attributed to the high cis-1,4 structure content.

Nevertheless, it is sometimes difficult to control the reactivity to a styrene monomer and rubber particle size of the high-cis/high-vinyl polybutadiene, which depends on such conditions as a composition. Such being the case, improvement has been desired for increasing various physical properties of HIPS such as impact resistance balance.

While the high-cis/high-vinyl polybutadiene has a high cis microstructure with a moderate 1,2-structure content and a low trans structure content and high molecular linearity, it shows relatively high cold flow, which sometimes needs improvement for storage and transportation.

SUMMARY OF THE INVENTION

An object of the present invention is to provide a rubber-modified HIPS resin composition having improved physical properties in good balance, such as impact resistance, gloss, and low temperature characteristics, by using a rubber modifier which exhibits improved cold flow and is easy to control in terms of reactivity to a styrene monomer and particle size.

The above object is accomplished by a rubber-modified HIPS resin composition containing a rubbery polymer, wherein the rubbery polymer is modified polybutadiene obtained by modifying high-cis/high-vinyl polybutadiene in the presence of a transition metal catalyst.

The rubber-modified HIPS resin composition of the present invention exhibits well-balanced improved properties, such as impact resistance.

DESCRIPTION OF THE PREFERRED EMBODIMENTS

The high-cis/high-vinyl polybutadiene (hereinafter abbreviated as "HC/HV BR") which can be used in the present invention preferably comprises 65 to 95 mol%, particularly 70 to 90 mol%, of a cis-1,4 structure unit and 4 to 30 mol%, particularly 5 to 25 mol%, especially 7 to 15 mol%, of a vinyl structure (1,2-structure) unit. The HC/HV BR preferably has a trans-1,4 structure content of not more than 5 mol%, particularly 0.5 to 4.0 mol%.

The HC/HV BR preferably has a 5 wt% styrene solution viscosity (St-cp; at 25°C) to Mooney viscosity ($ML_{1+4}$; at 100°C) ratio (St-cp/$ML_{1+4}$) of 2.0 to 7.0, particularly 2.0 to 6.0.

The 5% styrene solution viscosity of the HC/HV BR at 25°C (St-cp) preferably ranges from 20 to 500, particularly 30 to 300.

The Mooney viscosity ($ML_{1+4}$) of the HC/HV BR preferably ranges from 10 to 200, particularly 25 to 100.

The HC/HV BR preferably has a 5 wt% toluene solution viscosity (T-cp; at 25°C) to Mooney viscosity ($ML_{1+4}$; at 100°C) ratio ranging from 0.5 to 3.5, particularly 2.0 to 3.5. The 5% toluene solution viscosity (T-cp) of the HC/HV BR at 25°C is preferably 20 to 500, particularly 30 to 300.

The molecular weight of the HC/HV BR is preferably such that the intrinsic viscosity [η] is 0.1 to 10, particularly 0.1 to 3, measured in toluene at 30°C.

The HC/HV BR preferably has a polystyrene equivalent number average molecular weight (Mn) of $0.2 \times 10^5$ to $10 \times 10^5$, particularly $0.5 \times 10^5$ to $5 \times 10^5$, and a polystyrene equivalent weight average molecular weight (Mw) of $0.5 \times 10^5$ to $20 \times 10^5$, particularly $1 \times 10^5$ to $10 \times 10^5$.

The molecular weight distribution (Mw/Mn) of the HC/HV BR is preferably 1.5 to 3.5, still preferably 1.6 to 3.

The HC/HV BR can be prepared by, for example, polymerizing butadiene in the presence of a catalyst system comprising (A) a metallocene type complex of a transition metal and (B) an ionic compound composed of a non-coordinating anion and a cation and/or an aluminoxane.

The HC/HV BR can also be prepared by polymerizing butadiene in the presence of a catalyst system comprising (A) a metallocene type complex of a transition metal, (B1) an ionic compound composed of a non-coordinating anion and a cation, (C) an organometallic compound of an element of the group 1 to 3 of the Periodic Table, and (D) water.

The metallocene type complex of a transition metal as component (A) includes metallocene type complexes of transition metals of the groups 4 to 8 of the Periodic Table, such as the group 4 transition metals (e.g., titanium and zirconium), the group 5 transition metals (e.g., vanadium, niobium or tantalum), the group 6 transition metals (e.g., chromium), and the group 8 transition metals (e.g., cobalt or nickel). $CpTiCl_3$ (Cp: cyclopentadienyl) can be mentioned as an example of the group 4 transition metal metallocene type complex.

Inter alia, metallocene type complexes of the group 5 transition metals are suitable.

The metallocene type complex of the group 5 transition metal includes compounds represented by the following formulae (1) to (6).

(1) RM·La (a compound composed of a cycloalkadienyl ligand and a group 5 transition metal having an oxidation number of +1)

(2) $R_nMX_{2-n}$·La (a compound composed of at least one cycloalkadienyl ligand and a group 5 transition metal having an oxidation number of +2)

(3) $R_nMX_{3-n}$·La

(4) $RMX_3$·La

(5) $RM(O)X_2$·La

(6) $R_nMX_{3-n}(NR')$

wherein R represents a cycloalkadienyl group; M represents a group 5 transition metal; X represents a hydrogen atom, a halogen atom, a hydrocarbon group having 1 to 20 carbon atoms an alkoxy group or an amino group, a plurality of which may be the same or different; L represents a Lewis base; NR' represents an imido group; R' represents a hydrocarbon substituent having 1 to 25 carbon atoms; n represents 1 or 2; and a represents 0, 1 or 2.

Preferred of the compounds (1) to (6) shown above are (1) RM·La, (2) $R_nMX_{2-n}$·La, (4) $RMX_3$·La, and (5) $RM(O)X_2$·La.

Of the metallocene type complexes of the group 5 transition metals particularly preferred are vanadium compounds (M=V), such as $RV·L_a$, $RVX·L_a$, $R_2V·L_a$, $RVX_2·L_a$, $RVX_3·L_a$, $RV(O)X_2·L_a$, and the like. $RV·L_a$, and $RVX_3·L_a·$ are especially preferred.

Specific examples of the compound represented by $RMX_3·L_a$ include cyclopentadienylvanadium trichloride.

Specific examples of $RM(O)X_2·L_a$ include cyclopentadienyloxovanadium dichloride, methylcyclopentadienyloxovanadium dichloride, benzylcyclopentadienyloxovanadium dichloride, and (1,3-dimethylcyclopentadienyl)oxovanadium dichloride.

Of component (B) which constitutes the polymerization catalyst, the ionic compound (B1) is composed of a non-coordinating anion and a cation. The non-coordinating anion includes tetraphenylborate, tetra(fluorophenyl)borate.

The cation includes tri-substituted carbonium cations, e.g., a triphenylcarbonium cation.

An aluminoxane (B2) as component (B) is a compound obtained by bringing an organoaluminum compound into contact with a condensing agent and includes an acyclic aluminoxane represented by formula $(-Al(R')O-)_n$ and a cyclic aluminoxane, wherein R' represents a hydrocarbon group having 1 to 10 carbon atoms, part of which may be substituted with a halogen atom and/or an alkoxy group; and n represents a degree of polymerization of 5 or more, preferably 10 or more). R' preferably represents a methyl, ethyl, propyl or isobutyl group, with a methyl group being preferred.

In the present invention, polymerization of butadiene can be carried out in the presence of (C) an organometallic compound of the group 1 to 3 element of the Periodic Table in combination with components (A) and (B). Addition of component (C) is effective in increasing the polymerization activity of the catalyst system. The organometallic compound of the group 1 to 3 element includes organoaluminum compounds, organolithium compounds, organomagnesium compounds, organozinc compounds and organoboron compounds.

A preferred catalyst system comprises (A) $RMX_3$, e.g., cyclopentadienylvanadium trichloride ($CpVCl_3$), or RM $(O)X_2$, e.g., cyclopentadienyloxovanadium dichloride ($CpV(O)Cl_2$), (B) triphenylcarbonium tetrakis(pentafluorophenyl) borate and (C) a trialkylaluminum, e.g., triethylaluminum.

Where an ionic compound is used as component (B), the above-described aluminoxane may be used as component (C) in combination.

While the ratio of the catalyst components varies depending on various conditions and their combination, a preferred molar ratio of the aluminoxane as component (B) to the metallocene type complex as component (A), (B)/ (A), is 1 to 100000, particularly 10 to 10000; a preferred molar ratio of the ionic compound as component (B) to component (A), (B)/(A), is 0.1 to 10, particularly 0.5 to 5; and a preferred molar ratio of component (C) to component (A), (C)/(A), is 0.1 to 10000, particularly 10 to 1000.

It is preferred for the catalyst system to further comprise water as component (D). A preferred component (C) to component (D) molar ratio, (C)/(D), is 0.66 to 5, particularly 0.7 to 1.5.

The order of adding the catalyst components is not particularly restricted.

If desired, hydrogen may be present in the polymerization system.

It may be either a part of, or the whole of, butadiene to be polymerized that is added in the polymerization stage before addition of a transition metal catalyst for modification. In the former case, a mixture of the above-described catalyst components can be mixed into the rest of the butadiene monomer or butadiene monomer solution. The rest of the butadiene monomer or butadiene monomer solution is added after completion of this stage of polymerization and before or after addition of a transition metal catalyst hereinafter described.

The polymerization method is not particularly limited, and solution polymerization, bulk polymerization, and the like can be adopted. In bulk polymerization, 1,3-butadiene also serves as a polymerization solvent. Useful solvents for solution polymerization include aromatic hydrocarbons, e.g., toluene, benzene, and xylene; aliphatic hydrocarbons, e.g., n-hexane, butane, heptane, and pentane; alicyclic hydrocarbons, e.g., cyclopentane and cyclohexane; olefinic hydrocarbons, e.g., 1-butene and 2-butene; hydrocarbon solvents, such as mineral spirit, solvent naphtha and kerosine; and halogenated hydrocarbons, e.g., methylene chloride.

The HC/HV BR may be a mixture of a low molecular HC/HV BR component and a high molecular HC/HV BR component.

The molecular weight of the HC/HV BR can be regulated by, for example, polymerizing butadiene using a mixture of the above-described catalyst components in the presence of a chain transfer agent such as hydrogen.

Modification of the HC/HV BR for obtaining the modified polybutadiene used in the present invention is then described.

After the reaction for obtaining HC/HV BR achieves a prescribed degree of polymerization, a transition metal catalyst is added to the polymerization reaction system, and the system is allowed to react to modify the polymer chain.

The transition metal catalyst is preferably a system comprising (1) a transition metal compound, (2) an organoaluminum compound and (3) water.

The transition metal compound of the transition metal catalyst includes titanium compounds, zirconium compounds, vanadium compounds, chromium compounds, manganese compounds, iron compounds, ruthenium compounds, cobalt compounds, nickel compounds, palladium compounds, copper compounds, silver compounds, and zinc compounds, with cobalt compounds being preferred.

The cobalt compounds preferably include salts or complexes of cobalt. Suitable examples of the cobalt salts are cobalt chloride, cobalt bromide, cobalt nitrate, cobalt octylate, cobalt naphthenate, cobalt versatate, cobalt acetate, and cobalt malonate. Suitable examples of the cobalt complexes are bisacetylacetonatocobalt, trisacetylacetonatocobalt, bis(ethyl acetoacetato)cobalt, an organic base complex of halogenated cobalt, such as a triarylphosphine complex, a trialkylphosphine complex, a pyridine complex and a picoline complex, and an ethyl alcohol complex of halogenated cobalt.

Preferred of these cobalt compounds are cobalt octylate, cobalt naphthenate, cobalt versatate, bisacetylacetonatocobalt, and trisacetylacetonatecobalt.

The organoaluminum compound of the transition metal catalyst includes trialkylaluminums, such as trimethylaluminum, triethylaluminum, triisobutylaluminum, trihexylaluminum, trioctylaluminum, and tridecylaluminum; dialkylaluminum halides, such as dimethylaluminum chloride, dimethylaluminum bromide, diethylaluminum chloride, diethylaluminum bromide, diethylaluminum iodide, dibutylaluminum chloride, dibutylaluminum bromide, and dibutylaluminum iodide; alkylaluminum sesquihalides, such as methylaluminum sesquichloride, methylaluminum sesquibromide, ethylaluminum sesquichloride, and ethylaluminum sesquibromide; and monoalkylaluminum halides, such as methylaluminum dichloride, methylaluminum dibromide, ethylaluminum dichloride, ethylaluminum dibromide, butylaluminum dichloride, and butylaluminum dibromide. These aluminum compounds can be used either individually or as a mixture of two or more thereof. Diethylaluminum chloride is particularly preferred of them.

While the amount of the transition metal compound, such as the cobalt compound, to be used is subject to variation in a broad range according to a desired degree of branching, it is preferably from $1 \times 10^{-7}$ to $1 \times 10^{-3}$ mol, particularly $5 \times 10^{-7}$ to $1 \times 10^{-4}$ mol, per mole of polybutadiene.

The amount of the organoaluminum compound to be used is also subject to variation in a broad range according to a desired degree of branching but is preferably from $1 \times 10^{-5}$ to $5 \times 10^{-2}$ mol, particularly $5 \times 10^{-5}$ to $1 \times 10^{-2}$ mol, per mole of polybutadiene.

Water is used in any amount according to a desired degree of branching. It is preferably added in an amount not more than 1.5 mol, particularly 1 mol or less, per mole of the organoaluminum compound.

After polymerization is carried out for a prescribed period of time, an inhibitor, such as an alcohol, is added to the reaction system to cease the polymerization. If necessary, the pressure in the polymerization tank is liberated. The resulting modified polybutadiene is worked up by washing, drying, and the like.

The modified polybutadiene thus obtained by modifying the HC/HV BR desirably has a $T\text{-}cp/ML_{1+4}$ ratio of 0.5 to 3.5, more desirably 1.5 to 3, most desirably 2 to 3.

The T-cp of the modified polybutadiene is preferably 30 to 300, still preferably 45 to 200, particularly preferably 100 to 200.

The $ML_{1+4}$ of the modified polybutadiene is preferably 10 to 200, still preferably 25 to 100.

The modified polybutadiene preferably has a cold flow rate (CF) of less than 20 mg/min, particularly less than 15 mg/min.

The modified polybutadiene preferably comprises 65 to 95 mol% of a cis-1,4 structure unit and 4 to 30 mol% of a vinyl structure unit.

The modified polybutadiene preferably has an intrinsic viscosity [η] of 0.5 to 7.0 measured in toluene at 30°C.

The rubber-modified HIPS resin composition according to the present invention contains the above-described modified polybutadiene as a rubbery polymer (rubber modifier). The rubber-modified HIPS resin composition preferably contains 1 to 25 parts by weight, particularly 5 to 20 parts by weight, of the modified polybutadiene per 100 parts by weight of the composition. With a lower content of the modified polybutadiene, the effects of the present invention are not sufficiently produced. As the modified polybutadiene content increases, the impact resistance of the composition is improved. Nevertheless, a higher content than the above range results in an increased viscosity of the styrene solution, making rubber particle size control difficult. As a result, the composition fails to manifest the expected effects of the invention and loses its industrial applicability.

The rubber-modified HIPS resin composition is produced by, for example, polymerizing a styrene monomer in the presence of the rubbery polymer (i.e., the rubber-modified polybutadiene). Bulk polymerization or bulk suspension polymerization is economically advantageous. The styrene monomer to be polymerized is at least one of styrene-based compounds commonly known for the production of rubber-modified HIPS resin compositions, such as styrene, an alkyl-substituted styrene (e.g., α-methylstyrene or p-methylstyrene) and a halogen-substituted styrene (e.g., chlorostyrene). Styrene is the most suitable monomer.

If desired, the polymerization system can contain other polymers, such as a styrene-butadiene copolymer, an ethylene-propylene copolymer, an ethylene-vinyl acetate copolymer or an acrylic rubber, in an amount up to 50% by weight based on the rubbery polymer. Two or more rubber-modified HIPS resin compositions prepared by the above-described process can be blended to obtain a rubber-modified HIPS resin composition with desired properties. The resulting rubber-modified HIPS resin composition may be blended with other polystyrene resins to obtain a resin composition with desired properties.

The following presents an illustrative example of the bulk polymerization. In 75 to 99% by weight of a styrene monomer is dissolved 1 to 25% by weight of the rubbery polymer. A solvent, a molecular weight regulator, a polymerization initiator, etc. are added to the solution according to necessity. The rubbery polymer is converted into rubber particles until a styrene monomer conversion reaches 10 to 40%. The rubber phase forms a continuous phase until the rubber particles are produced. With further progress of the polymerization, the rubber particles come to constitute a disperse phase. The polymerization is continued to finally achieve a styrene conversion of 50 to 99% to obtain the rubber-modified HIPS resin composition of the invention.

To carry out the reaction, the polymerization conditions generally employed for styrene monomer polymerization in the presence of a rubbery polymer are adapted. It is preferable that the reaction is carried out by dissolving 5 to 20% by weight of the rubbery polymer in 80 to 95% by weight of a styrene monomer so that the rubbery polymer is converted into rubber particles at a styrene monomer conversion of 10 to 20%.

The "rubber particles" as referred to in the present invention are particles dispersed in a polystyrene matrix and comprising the rubbery polymer and a polystyrene resin. The polystyrene resin is either graft bonded to, and/or absorbed into, the rubbery polymer. The rubber particles usually have a particle size of 0.5 to 7.0 μm. Rubber particles with a particle size of 0.8 to 3.0 μm, particularly 1.0 to 3.0 μm, are preferred.

The produced rubber particles generally have a graft ratio of 150 to 350. Those having a graft ratio of 200 to 350, particularly 200 to 300, are preferred. The rubber particles preferably have a swelling index of 8 to 15, particularly 10 to 13. Where the graft ratio and the swelling index of the rubber particles are out of the above ranges, the rubber-modified HIPS resin composition may have reduced properties, such as impact resistance and gloss.

The above-described process of production may be carried out either batchwise or continuously.

The reaction solution mainly comprising the styrene monomer and the rubbery polymer is preferably allowed to react in a perfect mixing reactor, in which the solution is kept in a uniformly mixed state. Stirred tank reactors with a helical ribbon impeller, a double helical impeller, an anchor or a like impeller are preferred perfect mixing reactors. A helical ribbon impeller is preferably combined with a draft tube to enhance the vertical circulation of the reaction system in the reactor.

It is preferred that the rubber-modified HIPS resin composition contain 2 to 60 parts by weight, particularly 5 to 30 parts by weight, of a flame retardant per 100 parts by weight of the composition. Use of a flame retardant provides an HIPS resin composition with a UL flame rating of V-0 or higher.

Useful flame retardants include halogen flame retardants, such as decabromodiphenyl ether, hexabromobenzene, tetrabromobisphenol A, tetrabromobisphenol A oligomers, tribromophenyl 2,3-dibromopropyl ether, hexabromocyclododecane, tetrabromoethane, tris(2,3-dibromopropyl) phosphate, chlorinated paraffin, and perchloropentacyclodecane; phosphorus flame retardants, such as ammonium phosphate, tricresyl phosphate, triethyl phosphate, tri (β-chloroethyl) phosphate, and tri(chloroethyl) phosphate; and inorganic flame retardants, such as red phosphorus, magnesium hydroxide, zirconium hydroxide, barium metaborate, antimony trioxide, and borax. These flame retardants can be used either individually or as a mixture thereof.

It is preferred that the rubber-modified HIPS resin composition contain a peroxide, such as an organic peroxide including dicumyl peroxide, 1,1-di-t-butylperoxy-3,3,5-trimethylcyclohexane, 1,1-di-t-butylperoxycyclohexane, 2,2-di-t-butylperoxybutane, n-butyl 4,4-bis(t-butylperoxy) valerate, 2,2-bis(4,4-di-t-butylperoxycyclohexane)propane, 2,2,4-trimethylpentyl peroxyneodecanate, α-cumyl peroxyneodecanate, t-butyl peroxyneohexanate, t-butyl peroxyacetate, t-butyl peroxylaurate, t-butyl peroxybenzoate, and t-butyl peroxyisophthalate. Inorganic peroxides, such as hydrogen peroxide and sodium peroxide, and peracids, such as peracetic acid and performic acid, are also useful.

The peroxide is preferably added in an amount of 0.001 to 3.0 parts by weight, particularly 0.005 to 1.0 part by weight, per 100 parts by weight of the rubber-modified HIPS resin composition.

The flame retardant and/or the peroxide can be added either during or after the preparation of the rubber-modified HIPS resin composition.

If desired, known additives, such as stabilizers including antioxidants and ultraviolet absorbers, parting agents, lubricants, colorants, fillers, plasticizers, higher fatty acids, organopolysiloxanes, silicone oils, antistatics, and blowing agents, can be added to the rubber-modified HIPS resin composition during or after the preparation.

The rubber-modified HIPS resin composition of the present invention is useful for the production of various known molded articles. It is particularly suited to injection molded articles used in the electrical or industrial fields for its excellence in flame retardancy, impact resistance, and tensile strength.

For example, it is fit for broad applications including the domestic and industrial applications, such as housings of color TV sets, radio cassette recorders, word processors, typewriters, facsimiles, VTR cassettes, and telephones; film or sheet applications for use as packaging materials or food containers; tire applications; and non-tire applications, such as golf balls and shoe soles.

The present invention will now be illustrated in greater detail with reference to Reference Examples, Examples, and Comparative Examples, but it should be understood that the invention is not construed as being limited thereto.

Various characteristics referred to in these Examples were measured as follows.

1) Microstructure

The microstructure of polybutadiene was determined from the IR absorption spectrum using calculated molar extinction coefficients at 740 cm$^{-1}$ (for cis-1,4 structure), 911 cm$^{-1}$ (for vinyl structure), and 967 cm$^{-1}$ (for trans-1,4 structure) according to the Hampton method.

2) Mooney viscosity (ML$_{1+4}$; 100°C)

Measured in accordance with the method specified in JIS K6300.

3) Styrene solution viscosity (5% St-cp; 25°C)

The viscosity (cP) of a solution of 5 g of a rubbery polymer in 95 g of styrene was measured at 25°C.

4) Toluene solution viscosity (5% T-cp; 25°C)

The viscosity (cP) of a solution of 5 g of a rubbery polymer in 95 g of toluene was measured at 25°C.

5) Intrinsic viscosity ([η])

Measured in toluene at 30°C.

6) Cold flow rate (CF)

A rubbery polymer, kept at 50°C, was sucked in a glass tube having an inner diameter of 6.4 mm by a pressure difference of 180 mmHg for 10 minutes. The weight of the polymer sucked up was divided by 10 to obtain a cold flow rate (CF; mg/min).

7) Rubber particle size

A rubber-modified HIPS resin composition was added to dimethylformamide to dissolve only the polystyrene portion which formed the matrix of the resin composition. An aliquot of the resulting solution was dispersed in an electrolytic solution of ammonium thiocyanate (dispersant) in dimethylformamide, and the volume average particle diameter of the dispersed rubber particles was measured with a Coulter counter, TM-II supplied by Nikkaki Bios Co., Ltd.

8) Graft ratio

One gram of a rubber-modified HIPS resin composition was vigorously stirred in 50 ml of a 1/1 (by weight) mixture of methyl ethyl ketone/acetone for 1 hour to dissolve and swell. The system was centrifuged, and the supernatant liquor was removed by decantation. The resulting solid was dried under reduced pressure at 50°C, cooled in a desiccator, and weighed to measure the methyl ethyl ketone/acetone insolubles (MEK/AC-insol.; unit: g). The graft ratio was calculated from the MEK/Ac-insol. and the amount of the rubbery polymer (R; unit: g) calculated from the rubber polymer content according to equation

$$\text{Graft ratio} = [\text{MEK/AC-insol. (g)} - \text{R (g)}] \times 100/\text{R (g)}$$

9) Izod impact strength

Measured in accordance with JIS K7110 (notched).

10) Du Pont impact strength

Represented by a 50% destruction energy measured with a Du Pont type falling weight impact tester.

11) Tensile characteristics

The tensile strength at yield and at break and elongation were measured in accordance with JIS K7113.

12) Gloss

Measured in accordance with JIS Z8742 (angle of incidence: 60°)

13) Flame retardance

Measured in accordance with UL-94 and rated V-2, V-1, V-0 or 5V (flame retardance increases in that order).

14) Melt flow index (MFI)

Measured in accordance with ASTM D1238G (200°C, 5 kg load).

15) Swelling index

One gram of a rubber-modified HIPS resin composition was vigorously stirred in 50 ml of toluene for 1 hour to dissolve and swell. The system was centrifuged, and the supernatant liquor was removed by decantation. The resulting solid (swollen and wet) was weighed. The solid was dried under reduced pressure at 100°C, cooled in a desiccator, and weighed again to obtain the wet weight to dry weight ratio, which was taken as a swelling index.

REFERENCE EXAMPLE 1

Preparation of Modified Polybutadiene

1) Polymerization

Into a 1.7 liter autoclave purged with nitrogen were charged 260 ml of cyclohexane and 140 ml of butadiene and stirred. To the mixture was added 5 μl of water, followed by stirring for 30 minutes. Hydrogen gas was introduced into the autoclave in an amount of 110 ml as measured at 20°C and 1 atm. with an integrating mass flow meter. To the mixture was added 0.36 ml of a 1 mol/l toluene solution of triethylaluminum. After 3 minute stirring, 0.5 ml of a 5 mmol/l toluene solution of cyclopentadienylvanadium trichloride ($CpVCl_3$) and 1.5 ml of a 2.5 mmol/l toluene solution of triphenylcarbonium tetrakis(pentafluorophenyl)borate ($Ph_3CB(C_6F_5)_4$) were added thereto in that order, and polymerization was carried out at 40°C for 30 minutes to obtain an HC/HV BR.

2) Modification

To the reaction system were added 4.8 ml of toluene containing 300 mg/l of water, 0.1 ml of a 1 mol/l toluene solution of diethylaluminum chloride, and 0.5 ml of a 5 mmol/l toluene solution of cobalt octylate ($Co(Oct)_2$), and the system was allowed to react at 40°C for 30 minutes. Ethanol containing 2,6-di-t-butyl-p-cresol was added thereto to stop the reaction. The solvent was evaporated off to give a modified polybutadiene. The microstructure and physical properties of the resulting modified polybutadiene are shown in Table 1 below.

REFERENCE EXAMPLE 2

Modified polybutadienes shown in Table 1 were prepared in the same manner as in Reference Example 1, except for altering the polymerization conditions for obtaining HC/HV BR and the modifying reaction conditions for the resulting HC/HV BR.

REFERENCE EXAMPLES 3 TO 5

Unmodified polybutadienes shown in Table 1 were prepared in the same manner as in Reference Example 1, except for altering the polymerization conditions.

REFERENCE EXAMPLES 6 AND 7

Existing polybutadienes shown in Table 1 were prepared using a known catalyst system (a cobalt or lithium compound, etc.) under generally employed polymerization conditions.

TABLE 1

| Ref. Ex. | Microstructure (mol%) | | | [η] | ML | St-cp (cP) | T-cp (cP) | CFm (mg/in) | Remark |
|---|---|---|---|---|---|---|---|---|---|
| | cis | trans | vinyl | | | | | | |
| 1 | 87.8 | 0.8 | 11.4 | 2.3 | 41 | 141 | 107 | 14.7 | modified |
| 2 | 87.8 | 0.8 | 11.4 | 2.5 | 48 | 177 | 134 | 11.5 | modified |
| 3 | 87.6 | 1.3 | 11.1 | 2.3 | 35 | 139 | 105 | 28.2 | unmodified |
| 4 | 87.6 | 1.2 | 11.2 | 2.4 | 39 | 166 | 126 | 21.9 | unmodified |
| 5 | 88.7 | 1.6 | 9.6 | - | 37 | 153 | - | 24.6 | unmodified |
| 6 | 97.8 | 1.0 | 1.2 | 2.3 | 43 | 145 | 110 | 13.5 | existing |
| 7 | 35.2 | 55.7 | 9.1 | 2.4 | 52 | 166 | 126 | 18.9 | existing |

EXAMPLE 1

Into a 1.5 liter autoclave equipped with a stirrer and purged with nitrogen were put 465 g of styrene and 35 g of the modified polybutadiene prepared in Reference Example 1. To the resulting styrene solution was added 0.15 g of n-dodecylmercaptan, and the styrene was pre-polymerized at 135°C at the stirring speed shown in Table 2 below until a styrene conversion of 30% was reached (for 1.5 hours). Into the reaction system was poured 500 ml of a 0.5 wt% polyvinyl alcohol aqueous solution, and 1.0 g of benzoyl peroxide and 1.0 g of dicumyl peroxide were added. The mixture was stirred at 100°C for 2 hours, 125°C for 3 hours, and 140°C for 2 hours to carry out polymerization continuously. After cooling the reaction mixture to room temperature, polymer beads thus produced were collected by filtration, washed with water, and dried. The polymer beads were pelletized with an extruder to obtain 450 g of a rubber-modified HIPS resin composition. The resulting resin composition was evaluated for various physical properties using injection molded specimens. The results obtained are shown in Table 2 below.

EXAMPLES 2 AND 3

Rubber-modified HIPS resin compositions were obtained in the same manner as in Example 1, except for changing the stirring speed in the pre-polymerization as shown in Table 2. The results of evaluation of the resulting compositions are shown in Table 2.

EXAMPLES 4 TO 6

Rubber-modified HIPS resin compositions were obtained in the same manner as in Example 1, except for using the modified polybutadiene prepared in Reference Example 2 and changing the stirring speed in the pre-polymerization as shown in Table 2. The results of evaluation of the resulting compositions are shown in Table 2.

COMPARATIVE EXAMPLES 1 TO 6

Rubber-modified HIPS resin compositions were obtained in the same manner as in Example 1, except for using the unmodified polybutadiene prepared in Reference Example 3 (Comparative Examples 1 and 2), the unmodified polybutadiene prepared in Reference Example 4 (Comparative Examples 3 and 4), the existing polybutadiene prepared in Reference Example 6 (Comparative Example 5) or the existing polybutadiene prepared in Reference Example 7 (Comparative Example 6) and changing the stirring speed in the pre-polymerization as shown in Table 2. The results of evaluation of the resulting compositions are shown in Table 2.

TABLE 2

| | Pre-polymerization | Results of Evaluation | | | | | | | |
|---|---|---|---|---|---|---|---|---|---|
| | Stirring Speed (rpm) | Rubber Particle Size (μm) | Graft Ratio (%) | Izod Impact Strength (kg·cm/cm) | Du Pont Impact Strength (kg·cm) | Tensile Characteristics | | | Gloss (%) |
| | | | | | | Yield Point (MPa) | Break Point (MPa) | Elongation (%) | |
| Ex. 1 | 400 | 3.08 | 286 | 8.1 | 37.9 | 30.2 | 30.1 | 30 | 64 |
| Ex. 2 | 600 | 2.77 | 261 | 8.4 | 38.1 | 31.9 | 31.9 | 32 | 63 |
| Ex. 3 | 800 | 2.04 | 239 | 9.1 | 38.8 | 32.3 | 32.2 | 35 | 70 |
| Ex. 4 | 400 | 3.24 | 290 | 8.0 | 37.6 | 30.4 | 30.4 | 29 | 61 |
| Ex. 5 | 600 | 2.94 | 276 | 8.3 | 38.0 | 31.5 | 31.0 | 31 | 63 |
| Ex. 6 | 800 | 2.30 | 288 | 8.6 | 38.3 | 31.2 | 31.3 | 33 | 66 |
| Comp. Ex. 1 | 400 | 3.08 | 280 | 8.2 | 38.0 | 30.3 | 30.1 | 31 | 63 |
| Comp. Ex. 2 | 600 | 2.91 | 275 | 8.3 | 38.1 | 31.7 | 31.2 | 31 | 65 |
| Comp. Ex. 3 | 400 | 3.22 | 289 | 8.0 | 37.9 | 30.5 | 30.3 | 28 | 60 |
| Comp. Ex. 4 | 600 | 2.93 | 275 | 8.3 | 30.0 | 31.5 | 31.0 | 30 | 63 |
| Comp. Ex. 5 | 600 | 3.04 | 270 | 8.3 | 36.0 | 30.6 | 30.6 | 22 | 44 |
| Comp. Ex. 6 | 600 | 2.89 | 290 | 7.5 | 37.7 | 31.9 | 31.8 | 17 | 54 |

EXAMPLE 7

A rubber-modified HIPS resin composition was obtained in the same manner as in Example 1, except for changing the stirring speed in the pre-polymerization as shown in Table 3 below. The results of evaluation of the resulting compositions are shown in Table 3.

EXAMPLES 8 AND 9

3/1 (by weight) mixture of decabromodiphenyl ether/antimony trioxide was added as a flame retardant to the rubber-modified HIPS resin composition of Example 7 in the amount shown in Table 3. The results of evaluation of the resulting compositions are shown in Table 3.

EXAMPLES 10 TO 12

Rubber-modified HIPS resin compositions were obtained in the same manner as in Example 7, except for using the modified polybutadiene prepared in Reference Example 2 and adding 3/1 (by weight) mixture of decabromodiphenyl ether/antimony trioxide to the resulting resin composition in the amount shown in Table 3 as a flame retardant. The results of evaluation of the resulting rubber-modified HIPS resin compositions are shown in Table 3.

COMPARATIVE EXAMPLES 7 TO 18

Rubber-modified HIPS resin compositions were obtained in the same manner as in Example 7, except for using the unmodified polybutadiene prepared in Reference Example 3 (Comparative Examples 7 to 9), the unmodified polybutadiene prepared in Reference Example 4 (Comparative Examples 10 to 12), the existing polybutadiene prepared in Reference Example 6 (Comparative Examples 13 to 15) or the existing polybutadiene prepared in Reference Example 7 (Comparative Examples 16 to 18) and adding 3/1 (by weight) mixture of decabromodiphenyl ether/antimony trioxide to the resulting resin composition in the amount shown in Table 3 as a flame retardant. The results of evaluation of the resulting rubber-modified HIPS resin compositions are shown in Table 3.

TABLE 3

| | | Pre-polymerization Stirring Speed (rpm) | Amount of Flame Retardant (%) | Results of Evaluation | | | | | | |
|---|---|---|---|---|---|---|---|---|---|---|
| | | | | Rubber Particle Size (μm) | Izod Impact Strength (kg·cm/cm) | Du Pont Impact Strength (kg·cm) | Tensile Characteristics | | | Flame Retardance |
| | | | | | | | Yield Point (MPa) | Break Point (MPa) | Elonga-tion (%) | |
| Example | 7 | 800 | 0 | 2.25 | 9.0 | 37.8 | 30.3 | 30.1 | 33 | - |
| | 8 | 800 | 15 | - | 8.5 | 32.7 | 30.4 | 30.3 | 15 | V-0 |
| | 9 | 800 | 25 | - | 7.1 | 25.0 | 30.2 | 30.2 | 8 | V-0 |
| | 10 | 800 | 0 | 2.40 | 8.8 | 37.7 | 30.1 | 30.0 | 34 | - |
| | 11 | 800 | 15 | - | 8.2 | 31.9 | 30.4 | 30.1 | 17 | V-0 |
| | 12 | 800 | 25 | - | 7.0 | 24.8 | 30.1 | 30.4 | 8 | V-0 |
| Comparative Example | 7 | 800 | 0 | 2.24 | 9.1 | 38.2 | 30.0 | 30.0 | 34 | - |
| | 8 | 800 | 15 | - | 8.4 | 33.1 | 30.5 | 30.0 | 17 | V-0 |
| | 9 | 800 | 25 | - | 7.0 | 24.9 | 30.1 | 30.1 | 9 | V-0 |
| | 10 | 800 | 0 | 2.26 | 9.0 | 37.9 | 30.0 | 30.1 | 32 | - |
| | 11 | 800 | 15 | - | 8.4 | 31.9 | 30.2 | 30.0 | 15 | V-0 |
| | 12 | 800 | 25 | - | 6.9 | 25.1 | 30.3 | 30.2 | 8 | V-0 |
| | 13 | 800 | 0 | 2.43 | 9.3 | 36.5 | 30.1 | 30.0 | 26 | - |
| | 14 | 800 | 15 | - | 7.9 | 28.4 | 30.0 | 29.9 | 5 | V-0 |
| | 15 | 800 | 25 | - | 6.5 | 20.6 | 29.9 | 29.7 | 4 | V-0 |
| | 16 | 800 | 0 | 2.33 | 8.2 | 37.3 | 30.3 | 30.1 | 20 | - |
| | 17 | 800 | 15 | - | 6.6 | 32.9 | 30.0 | 30.3 | 3 | V-0 |
| | 18 | 800 | 25 | - | 4.9 | 24.5 | 30.4 | 30.3 | 2 | V-0 |

EXAMPLES 13 TO 15

Rubber-modified HIPS resin compositions were obtained in the same manner as in Example 1, except that 1,1-di-t-butylperoxy-3,3,5-trimethylcyclohexane (peroxide) was added to the styrene solution to be pre-polymerized in the amount shown in Table 4 below. The results of evaluation of the resulting compositions are shown in Table 4.

EXAMPLES 16 TO 18

Rubber-modified HIPS resin compositions were obtained in the same manner as in Examples 13 to 15, except for using the modified polybutadiene prepared in Reference Example 2. The results of evaluation of the resulting compositions are shown in Table 4.

COMPARATIVE EXAMPLE 19

A rubber-modified HIPS resin composition was obtained in the same manner as in Example 16, except for changing the amount of the peroxide as shown in Table 4. The results of evaluation of the resulting compositions are shown in Table 4.

COMPARATIVE EXAMPLES 20 TO 24

Rubber-modified HIPS resin compositions were obtained in the same manner as in Example 16, except for using the unmodified polybutadiene prepared in Reference Example 5 and changing the pre-polymerization conditions (stirring speed and the amount of the peroxide) as shown in Table 4. The results of evaluation of the resulting compositions are shown in Table 4.

TABLE 4

| | | Pre-polymerization | | Results of Evaluation | | | | | | | |
| | | Stirring Speed (rpm) | Amount of Peroxide (%) | Rubber Particle Size (μm) | Graft Ratio (%) | Izod Impact Strength (kg·cm/cm) | Du Pont Impact Strength (kg·cm) | Tensile Characteristics | | Gloss (%) | MFI (g/10min) |
| | | | | | | | | Yield Point (MPa) | Break Point (MPa) | | |
| Example | 13 | 400 | 0.005 | 2.29 | 271 | 9.6 | 38.4 | 33.9 | 33.9 | 67 | 3.5 |
| | 14 | 400 | 0.01 | 1.99 | 254 | 11.0 | 39.2 | 34.1 | 34.0 | 82.0 | 3.7 |
| | 15 | 400 | 0.1 | 1.72 | 246 | 11.4 | 40.1 | 34.2 | 34.5 | 86.0 | 4.0 |
| | 16 | 400 | 0.005 | 2.95 | 292 | 9.0 | 37.8 | 33.4 | 33.0 | 60 | 3.3 |
| | 17 | 400 | 0.01 | 1.90 | 253 | 10.8 | 39.3 | 34.5 | 34.4 | 83 | 3.9 |
| | 18 | 400 | 0.1 | 1.41 | 240 | 11.4 | 40.5 | 34.8 | 35.0 | 88 | 4.3 |
| Comp. Example | 19 | 400 | 5.0 | 0.92 | 212 | 7.8 | 36.4 | - | - | 65 | - |
| | 20 | 400 | 1.0 | 1.39 | 238 | 11.7 | 40.7 | 31.7 | 31.2 | 89 | - |
| | 21 | 600 | 5.0 | 0.78 | - | 6.5 | - | 33.1 | 32.8 | - | 3.4 |
| | 22 | 400 | 0.001 | 3.17 | - | 7.7 | - | 30.6 | 30.2 | - | 2.2 |
| | 23 | 400 | 0.005 | 2.93 | - | 9.1 | - | 33.5 | 33.1 | - | 3.3 |
| | 24 | 400 | 5.0 | 0.91 | - | 8.0 | - | 34.9 | 34.2 | - | 4.3 |

EP 1 443 078 A1

EXAMPLES 19 AND 20

Rubber-modified HIPS resin compositions were obtained in the same manner as in Example 13, except for changing the pre-polymerization conditions as shown in Table 5 below (1,1-di-t-butylperoxy-3,3,5-trimethylcyclohexane was used as a peroxide). The results of evaluation of the resulting compositions are shown in Table 5.

EXAMPLES 21 TO 23

Rubber-modified HIPS resin compositions were obtained in the same manner as in Example 19, except for using the modified polybutadiene prepared in Reference Example 2 and changing the pre-polymerization conditions as shown in Table 5 below. The results of evaluation of the resulting compositions are shown in Table 5.

COMPARATIVE EXAMPLES 25 AND 26

Rubber-modified HIPS resin compositions were obtained in the same manner as in Example 19, except for using the unmodified polybutadiene prepared in Reference Example 5 and changing the pre-polymerization conditions as shown in Table 5 below. The results of evaluation of the resulting compositions are shown in Table 5.

TABLE 5

| | Pre-Polymerization | | Results of Evaluation | | | | |
|---|---|---|---|---|---|---|---|
| | Stirring Speed (rpm) | Amount of Peroxide (%) | Rubber Particle Size (µm) | Graft Ratio (%) | Swelling Index | Izod Impact Strength (kg·cm/cm) | Gloss (%) |
| Ex. 19 | 800 | 0.005 | 2.09 | 257 | 10.8 | 10.1 | 87 |
| Ex. 20 | 800 | 0.01 | 1.54 | 209 | 10.4 | 10.6 | 92 |
| Ex.21 | 800 | 0.005 | 2.12 | 266 | 11.1 | 9.9 | 86 |
| Ex. 22 | 800 | 0.01 | 1.68 | 212 | 10.3 | 10.5 | 91 |
| Ex. 23 | 300 | 0.01 | 3.59 | 343 | 9.6 | 9.4 | 81 |
| Comp. Ex. 25 | 800 | 0.005 | 2.11 | 265 | 10.9 | 9.8 | 86 |
| Comp. Ex. 26 | 300 | 0.01 | 3.73 | 304 | 9.5 | 9.1 | 80 |

EXAMPLES 24 TO 29

Rubber-modified HIPS resin compositions were obtained in the same manner as in Example 1, except for using the modified polybutadiene prepared in Reference Example 1 in the amount shown in Table 6 below or changing the stirring speed in the pre-polymerization as shown in Table 6. The results of evaluation of the resulting compositions are shown in Table 6.

EXAMPLES 30 TO 35

Rubber-modified HIPS resin compositions were obtained in the same manner as in Example 1, except for using the modified polybutadiene prepared in Reference Example 2 in the amount shown in Table 6 below and changing the stirring speed in the pre-polymerization as shown in Table 6. The results of evaluation of the resulting compositions are shown in Table 6.

COMPARATIVE EXAMPLES 27 TO 35

Rubber-modified HIPS resin compositions were obtained in the same manner as in Example 24, except for using the unmodified polybutadiene prepared in Reference Example 3 (Comparative Examples 27 to 29), the unmodified polybutadiene prepared in Reference Example 4 (Comparative Examples 30 to 32), the existing polybutadiene prepared in Reference Example 6 (Comparative Examples 33 to 34) or the existing polybutadiene prepared in Reference Example 7 (Comparative Example 35) in the amount shown in Table 6 and changing the stirring speed in the pre-polymerization as shown in Table 6. The results of evaluation of the resulting rubber-modified HIPS resin compositions are shown in Table 6.

TABLE 6

| | | Rubbery Polymer Content (%) | Pre-polymerization Stirring Speed (rpm) | Results of Evaluation | | | | | | | |
|---|---|---|---|---|---|---|---|---|---|---|---|
| | | | | Rubber Particle Size (μm) | Graft Ratio (%) | Izod Impact Strength (kg·cm/cm) | Du Pont Impact Strength (kg·cm) | Tensile Characteristics | | | Gloss (%) |
| | | | | | | | | Yield Point (MPa) | Break Point (MPa) | Elongation (%) | |
| Example | 24 | 7 | 400 | 3.08 | 286 | 8.1 | 37.9 | 30.2 | 30.1 | 30 | 64 |
| | 25 | 7 | 600 | 2.77 | 261 | 8.4 | 38.1 | 31.9 | 31.9 | 32 | 63 |
| | 26 | 7 | 800 | 2.04 | 239 | 9.1 | 38.8 | 32.3 | 32.2 | 35 | 70 |
| | 27 | 5 | 400 | 2.51 | 254 | 8.0 | 37.7 | 31.4 | 31.3 | 28 | 77 |
| | 28 | 5 | 600 | 2.18 | 231 | 8.2 | 38.0 | 32.1 | 32.2 | 31 | 83 |
| | 29 | 5 | 800 | 1.77 | 218 | 8.4 | 38.3 | 32.5 | 32.5 | 33 | 91 |
| | 30 | 7 | 400 | 3.24 | 290 | 8.0 | 37.6 | 30.4 | 30.4 | 29 | 61 |
| | 31 | 7 | 600 | 2.94 | 276 | 8.3 | 38.0 | 31.5 | 31.0 | 31 | 63 |
| | 32 | 7 | 800 | 2.30 | 288 | 8.6 | 38.3 | 31.2 | 31.3 | 33 | 66 |
| | 33 | 5 | 400 | 2.64 | 255 | 8.0 | 37.5 | 31.6 | 31.5 | 28 | 75 |
| | 34 | 5 | 600 | 2.23 | 227 | 8.1 | 37.9 | 32.5 | 32.3 | 30 | 81 |
| | 35 | 5 | 800 | 1.95 | 222 | 8.2 | 38.3 | 32.9 | 33.0 | 33 | 88 |
| Comparative Example | 27 | 7 | 400 | 3.08 | 280 | 8.2 | 38.0 | 30.3 | 30.1 | 31 | 63 |
| | 28 | 7 | 600 | 2.91 | 275 | 8.3 | 38.1 | 31.7 | 31.2 | 31 | 65 |
| | 29 | 5 | 600 | 2.26 | 232 | 7.6 | 37.4 | 31.3 | 31.2 | 30 | 78 |
| | 30 | 7 | 400 | 3.22 | 289 | 8.0 | 37.9 | 30.5 | 30.3 | 28 | 60 |
| | 31 | 7 | 600 | 2.93 | 275 | 8.3 | 30.0 | 31.6 | 31.0 | 30 | 63 |
| | 32 | 5 | 600 | 2.33 | 339 | 7.8 | 36.6 | 37.1 | 30.9 | 27 | 77 |
| | 33 | 7 | 600 | 3.04 | 270 | 8.3 | 36.0 | 30.6 | 30.6 | 22 | 44 |
| | 34 | 5 | 600 | 2.27 | 241 | 7.1 | 37.2 | 31.4 | 32.0 | 15 | 52 |
| | 35 | 7 | 600 | 2.89 | 290 | 7.5 | 37.7 | 31.9 | 31.8 | 17 | 54 |

**Claims**

1. A rubber-modified high impact polystyrene resin composition containing a rubbery polymer, wherein the rubbery polymer is modified polybutadiene obtained by modifying high-cis/high-vinyl polybutadiene in the presence of a transition metal catalyst.

2. The rubber-modified high impact polystyrene resin composition according to claim 1, wherein the high-cis/high-vinyl polybutadiene has a 5 wt% styrene solution viscosity (St-cp; at 25°C) to Mooney viscosity ($ML_{1+4}$; at 100°C) ratio ($St$-$cp/ML_{1+4}$) ranging from 2.0 to 7.0.

3. The rubber-modified high impact polystyrene resin composition according to claims 1 or 2, wherein the high-cis/high-vinyl polybutadiene comprises 65 to 95 mol% of a cis-1,4 structure unit and 4 to 30 mol% of a vinyl structure unit.

4. The rubber-modified high impact polystyrene resin composition according to anyone of the preceding claims, wherein the high-cis/high-vinyl polybutadiene is prepared by using a metallocene catalyst.

5. The rubber-modified high impact polystyrene resin composition according to claim 4, wherein the metallocene catalyst comprises (A) a metallocene type complex of a transition metal and (B) at least one of (B1) an ionic compound composed of a non-coordinating anion and a cation and (B2) an aluminoxane.

6. The rubber-modified high impact polystyrene resin composition according to anyone of the preceding claims, wherein the modified polybutadiene has a cold flow rate of less than 20 mg/min.

7. The rubber-modified high impact polystyrene resin composition according to anyone of the preceding claims, wherein the rubbery polymer is present in an amount of 1 to 25% by weight.

8. The rubber-modified high impact polystyrene resin composition according to claim 7, further containing 2 to 60 parts by weight of a flame retardant per 100 parts by weight of the composition.

9. The rubber-modified high impact polystyrene resin composition according to claim 7, further containing 0.001 to 3.0 parts by weight of a peroxide per 100 parts by weight of the composition.

10. The rubber-modified high impact polystyrene resin composition according to anyone of the preceding claims, wherein the rubbery polymer is rubber particles dispersed in a polystyrene resin, and the rubber particles have a particle size ranging from 0.8 to 3.0 $\mu$m.

11. The rubber-modified high impact polystyrene resin composition according to anyone of the preceding claims, wherein the rubbery polymer is rubber particles dispersed in a polystyrene resin, and the rubber particles have a graft ratio of 200 to 350 and a swelling index of 8 to 15.

12. The rubber-modified high impact polystyrene resin composition according to anyone of the preceding claims, wherein the modified polybutadiene has a 5 wt% toluene solution viscosity (T-cp; at 25°C) to Mooney viscosity ($ML_{1+4}$; at 100°C) ratio ($T$-$cp/ML_{1+4}$) ranging from 0.5 to 3.5 and a cold flow rate of less than 20 mg/min.

13. The rubber-modified high impact polystyrene resin composition according to claim 12, wherein the modified polybutadiene comprises 65 to 95 mol% of a cis-1,4 structure unit and 4 to 30 mol% of a vinyl structure unit.

14. The rubber-modified high impact polystyrene resin composition according to claims 12 or 13, wherein the modified polybutadiene has an intrinsic viscosity of 0.5 to 7.0 measured in toluene at 30°C.

**European Patent Office**

## EUROPEAN SEARCH REPORT

Application Number

EP 04 00 1970

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 841 375 A (UBE INDUSTRIES) 13 May 1998 (1998-05-13) * the whole document * | 1-14 | C08L25/06 C08F279/02 C08F8/48 C08F136/06 |
| D | & JP 10 139835 A (UBE IND LTD) 26 May 1998 (1998-05-26) | | |
| D | & JP 10 152535 A (UBE IND LTD) 9 June 1998 (1998-06-09) | | |
| D | & JP 10 218949 A (UBE IND LTD) 18 August 1998 (1998-08-18) ----- | | |
| Y | JP 2003 012739 A (UBE IND LTD) 15 January 2003 (2003-01-15) * paragraphs [0073] - [0075]; table 1 * ----- | 1-14 | |

|  |  |
|---|---|
|  | TECHNICAL FIELDS SEARCHED (Int.Cl.7) |
|  | C08L C08F |

The present search report has been drawn up for all claims

| Place of search | Date of completion of the search | Examiner |
|---|---|---|
| The Hague | 11 May 2004 | Rodriguez, L |

EPO FORM 1503 03.82 (P04C01)

## ANNEX TO THE EUROPEAN SEARCH REPORT
## ON EUROPEAN PATENT APPLICATION NO.

EP 04 00 1970

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2004

| Patent document cited in search report | | Publication date | Patent family member(s) | | Publication date |
|---|---|---|---|---|---|
| EP 0841375 | A | 13-05-1998 | JP | 10139835 A | 26-05-1998 |
| | | | JP | 10152535 A | 09-06-1998 |
| | | | JP | 10218949 A | 18-08-1998 |
| | | | CA | 2220353 A1 | 12-05-1998 |
| | | | DE | 69712708 D1 | 27-06-2002 |
| | | | DE | 69712708 T2 | 24-10-2002 |
| | | | EP | 0841375 A1 | 13-05-1998 |
| | | | TW | 418232 B | 11-01-2001 |
| | | | US | 5981667 A | 09-11-1999 |
| JP 10139835 | A | 26-05-1998 | CA | 2220353 A1 | 12-05-1998 |
| | | | DE | 69712708 D1 | 27-06-2002 |
| | | | DE | 69712708 T2 | 24-10-2002 |
| | | | EP | 0841375 A1 | 13-05-1998 |
| | | | TW | 418232 B | 11-01-2001 |
| | | | US | 5981667 A | 09-11-1999 |
| JP 10152535 | A | 09-06-1998 | CA | 2220353 A1 | 12-05-1998 |
| | | | DE | 69712708 D1 | 27-06-2002 |
| | | | DE | 69712708 T2 | 24-10-2002 |
| | | | EP | 0841375 A1 | 13-05-1998 |
| | | | TW | 418232 B | 11-01-2001 |
| | | | US | 5981667 A | 09-11-1999 |
| JP 10218949 | A | 18-08-1998 | CA | 2220353 A1 | 12-05-1998 |
| | | | DE | 69712708 D1 | 27-06-2002 |
| | | | DE | 69712708 T2 | 24-10-2002 |
| | | | EP | 0841375 A1 | 13-05-1998 |
| | | | TW | 418232 B | 11-01-2001 |
| | | | US | 5981667 A | 09-11-1999 |
| JP 2003012739 | A | 15-01-2003 | NONE | | |

EPO FORM P0459

For more details about this annex : see Official Journal of the European Patent Office, No. 12/82